# EUROPÄISCHE PATENTSCHRIFT

(11) **EP 3 521 379 B1**
(45) Veröffentlichungstag und Bekanntmachung des Hinweises auf die Patenterteilung: **14.10.2020**
(21) Anmeldenummer: 18154693.8
(22) Anmeldetag: 01.02.2018
(51) Int. Cl.: C09B 62/51, D06P 1/39

(54) **FASERREAKTIVE AZOFARBSTOFFE SOWIE FARBSTOFFGEMISCHE, VERFAHREN ZU IHRER HERSTELLUNG UND IHRE VERWENDUNG ZUM FÄRBEN ODER BEDRUCKEN**
FIBRE-REACTIVE AZO DYES AND MIXTURES OF DYESTUFFS, METHOD FOR THEIR PREPARATION AND THEIR USE FOR DYEING OR PRINTING
COLORANTS AZOIQUES RÉACTIFS SUR LA FIBRE AINSI QUE MÉLANGES DE COLORANTS, LEUR PROCÉDÉ DE FABRICATION ET LEUR UTILISATION DESTINÉE À LA COLORATION ET À L'IMPRESSION

(43) Veröffentlichungstag der Anmeldung: 07.08.2019
(73) Patentinhaber: CHT Switzerland AG, 9462 Montlingen (CH)
(72) Erfinder: DUERR, Jimmel, 9463 Oberriet (CH); STEFFENS, Ralph, 9494 Schaan (LI); EHRENBERG, Stefan, 9442 Berneck (CH); WALCHER, Gunter, 6863 Egg (AT)
(74) Vertreter: Schaad, Balass, Menzl & Partner AG

(56) Entgegenhaltungen:
- EP-A2- 0 252 508
- EP-A2- 0 273 343

## Beschreibung

Die Erfindung betrifft faserreaktive Azofarbstoffe gemäss Anspruch 1 sowie Farbstoffgemische. Ferner betrifft die Erfindung Verfahren zur Herstellung der erfindungsgemässen Azofarbstoffe bzw. Farbstoffgemische sowie ihre Verwendung zum Färben oder Bedrucken von Materialien, insbesondere textilen Fasermaterialien.

Azofarbstoffe sind synthetische Farbstoffe die eine oder mehrere Azogruppen (-N=N-) als Bestandteil ihrer chemischen Konstitution aufweisen. Die Herstellung der Azofarbstoffe erfolgt durch Diazotierung von aromatischen Aminen und anschliessender Kupplung auf geeignete Kupplungskomponenten. Mit der Vielfalt der so herstellbaren Azofarbstoffe wird ein breites Spektrum von Farbtönen erreicht, die mitunter zur Einfärbung das für die Einfärbung von synthetischen und natürlichen Textilfasern geeignet sind. Entsprechend spielen Azofarbstoffe als Färbemittel in der Textilindustrie eine grosse Rolle. Es besteht insbesondere ein Bedarf an brillanten grünstichig gelben bis gelben Reaktivazofarbstoffen, die farbstabile und lichtechte Eigenschaften sowie kräftige Farben mit tiefem Aufbau haben und insbesondere in Mischungen mit anderen Farbstoffen zum Färben oder Bedrucken von Materialien verwendet werden können.

Die Anforderungen an die Echtheiten der gefärbten Textilien sind in den letzten Jahren vielerorts gestiegen, so wird z.B. eine gute Bewertung der Farbechtheit nach einer Mehrfachwäsche gemäss ISO 105-C09 von vielen Abnehmern der produzierten Textilien verlangt. Farbstoffe mit einer guten Waschpermanenz erhöhen die Langlebigkeit von Textilien.

In der Literatur sind zahlreiche faserreaktive Farbstoffe beschrieben, die sich zum Färben oder Bedrucken von hydroxy- und/oder carbonamidhaltigen Fasern, wie insbesondere Cellulosefasern, zur Erzeugung von gelben Färbungen eignen.

Von diesen Farbstoffen sind insbesondere diejenigen von technischem Interesse, die aus EP 0273343 bekannt sind. Diese gelbfärbenden Farbstoffe zeigen anwendungstechnische Mängel auf, insbesondere in Bezug auf gleichzeitige Erfüllung von gewünschten Eigenschaften wie hoher Brillanz, guter Mehrfachwaschechtheit und gutem Farbaufbau.

Es ist daher Aufgabe der Erfindung Azofarbstoffe bereitzustellen, welche die hohen Anforderungen an Textilfärbemittel hinsichtlich Brillanz, Auswaschbarkeit und Echtheiten sowie über einen verbesserten Aufbau verfügen.

Die obige Aufgabe wird gelöst durch die Azofarbstoffe gemäss Anspruch 1 oder 2 und die Farbstoffmischungen gemäss Ansprüche 3 bis 6. Bevorzugte Ausführungsformen sind Gegenstand der abhängigen Ansprüche.

Die vorliegende Erfindung betrifft faserreaktive Azofarbstoffe der allgemeinen Formel (1) 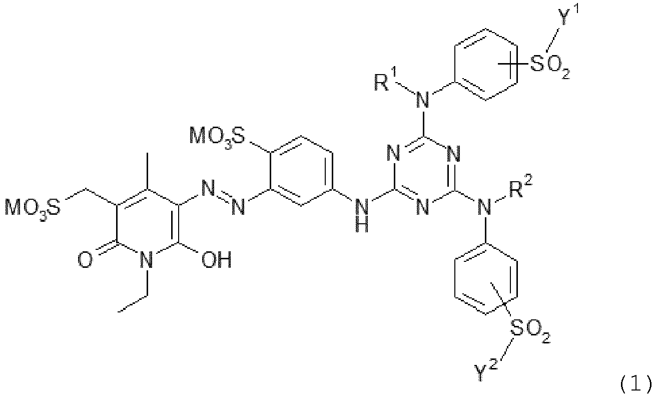 wobei
- M: für Wasserstoff oder ein Alkalimetall;
- R¹ und R²: unabhängig voneinander für Wasserstoff (-H), Methyl (-CH₃) oder Ethyl (-CH₂-CH₃) ; und
- Y¹ und Y²: unabhängig voneinander für -CH=CH₂ oder -CH₂-CH₂-Z, stehen
und Z eine unter alkalischen Bedingungen abspaltbare Gruppe ist.

Die vorliegende Erfindung betrifft ausserdem Farbstoffmischungen, enthaltend einen oder mehrere faserreaktive Azofarbstoffe der allgemeinen Formel (1), sowie mindestens einen weiteren faserreaktiven Farbstoff. Durch die Verwendung von Farbstoffmischungen kann eine breite Palette an Farbtönen erzielt werden.

Bei den Azofarbstoffen der vorliegenden Erfindung handelt es sich um faserreaktive Azofarbstoffe. Solche Azofarbstoffe reagieren mit Fasern unter Knüpfung einer kovalenten Bindung und sind insbesondere zum Färben von Fasermaterialien, wie etwa Cellulose, Wolle und Polyamid, geeignet.

Unter dem Begriff Fasermaterialien oder Fasern werden im Rahmen der vorliegenden Erfindung insbesondere Textilfasern verstanden, die als Gewebe, Garne oder in Form von Strängen oder Wickelkörpern vorliegen können.

Bevorzugte erfindungsgemässe Farbstoffmischungen enthalten einen oder mehrere Azofarbstoffe der allgemeinen Formel (1), sowie einen oder mehrere Farbstoffe, die aus der Gruppe bestehend aus den Farbstoffen der nachfolgenden allgemeinen Formeln (2) und (3) ausgewählt sind. 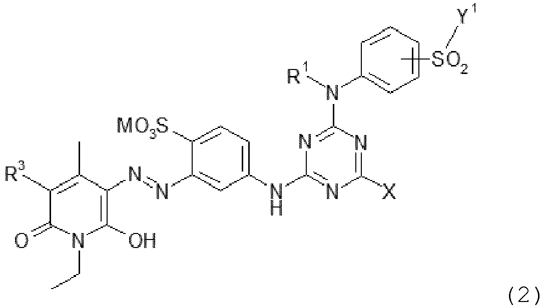 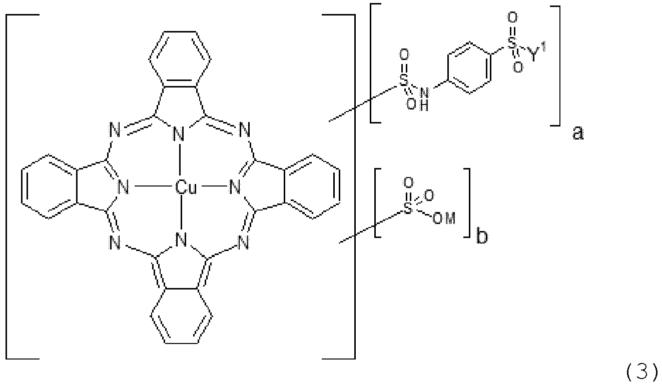 wobei
R³ für Sulfomethyl oder Carbamoyl;
X für Chlor (-Cl) oder Fluor (-F);
a für 1, 2 oder 3; und
b für {4-a} steht,
M für Wasserstoff oder ein Alkalimetall;
R¹ für Wasserstoff (-H), Methyl (-CH₃) oder Ethyl(-CH₂-CH₃) ; und
Y¹ und Y² unabhängig voneinander für -CH=CH₂ oder -CH₂-CH₂-Z, stehen
   und Z eine unter alkalischen Bedingungen abspaltbare Gruppe ist.

In den obigen allgemeinen Formeln (1) bis (3) bedeutet ein für M stehendes Alkalimetall, bzw. dessen Kation, bevorzugt Natrium (Na⁺), Kalium (K⁺) oder Lithium (Li⁺) .

Alkalisch eliminierbare Substituenten Z in β-Stellung einer für Y¹ oder Y² stehenden Ethylgruppe sind insbesondere Chlor (-Cl), saure Estergruppen anorganischer Säuren, wie der Phosphorsäure, Schwefelsäure und Thioschwefelsäure (Phosphato- (-PO₄³⁻), Sulfato- (-SO₄²⁻) oder Thiosulfato- (-S₂O₃²⁻)) oder (C₂-C₄) -Alkanoyloxy-Gruppen, wie beispielsweise Acetyloxy. Die Sulfato-, Thiosulfato- und Phosphato-Gruppen schliessen dabei sowohl deren Säureform als auch deren Salzform ein.

Besonders bevorzugt stehen für Y¹ oder Y² für Vinyl oder β-Sulfatoethyl.

In der Regel liegen in den erfindungsgemässen Farbstoffmischungen mindestens ein Azofarbstoff der allgemeinen Formel (1) in einer Menge von 10 bis 90 Gew.-%, bevorzugt 70 bis 30 Gew-% und besonders bevorzugt 40 bis 60 Gew.-%, sowie mindestens ein weiterer faserreaktiver Azofarbstoff der allgemeinen Formel (2) in einer Menge von 10 bis 90 Gew.-%, bevorzugt 30 bis 70 Gew.-% und besonders bevorzugt 40 bis 60 Gew.-% (bezogen auf die Gesamtfarbstoffmenge) vor.

Darüber hinaus können die Farbstoffmischungen zusätzlich einen oder mehrere Farbstoff (e) der oben angegebenen allgemeinen Formel (3) enthalten. Solche erfindungsgemässen Farbstoffmischungen enthalten den oder die Farbstoff(e) der allgemeinen Formel (3) vorzugsweise in einer Menge von 10 bis 90 Gew.-%, bevorzugter 30 bis 70 Gew.-% und besonders bevorzugt 40 bis 60 Gew.-%.

In einer bevorzugten Ausführungsform enthält die Farbstoffmischung 10 bis 80 Gew.-% an Azofarbstoff(en) der allgemeinen Formel (1), 10 bis 70 Gew.-% an Farbstoff (en) der allgemeinen Formel (2) und 10 bis 50 Gew.-% an Farbstoff(en) der allgemeinen Formel (3), bezogen auf die Gesamtfarbstoffmenge.

Farbstoffe der allgemeinen Formeln (1) bis (3) können in Mischungen vorliegen, in denen sich die Einzelfarbstoffe lediglich in den Reaktivgruppen -SO₂-Y¹ bzw. -SO₂-Y² unterscheiden.

Bevorzugte Mischungen dieser Art enthalten z.B. einen Farbstoff der allgemeinen Formel (1), (2) oder (3) mit Y¹ bzw. Y² = Vinyl und einen Farbstoff der allgemeinen Formel (1), (2) oder (3) mit Y¹ bzw. Y² = β-Sulfatoethyl.

Dabei kann der Anteil des Farbstoffs in der Vinylsulfonyl-Form bei bis zu etwa 30 Mol-%, bezogen auf den jeweiligen Farbstoffchromophor, liegen. Bevorzugt liegt der Anteil an Vinylsulfonyl-Farbstoff zu β-ethylsubstituiertem Farbstoff gei einem Molverhältnis zwischen 5:95 und 30:70.

Die erfindungsgemässen Azofarbstoffe der allgemeinen Formel (1) können als Präparationen in fester oder flüssiger (in Wasser gelöster) Form vorliegen. In fester Form enthalten sie im Allgemeinen die bei wasserlöslichen und bevorzugt faserreaktiven Azofarbstoffen üblichen Elektrolytsalze, wie Natriumchlorid, Kaliumchlorid und Natriumsulfat.

Des Weiteren können solche Präparationen die in Handelsfarbstoffen üblichen Hilfsmittel enthalten; etwa Puffersubstanzen, die in wässriger Lösung einen pH-Wert zwischen 3 und 7 einzustellen vermögen. Als Puffersubstanzen können beispielsweise Natriumacetat, Natriumborat, Natriumhydrogencarbonat, Natriumdi-hydrogenphospat, Natriumcitrat, Dinatriumhydrogenphosphat oder Natriumtripolyphosphat zum Einsatz kommen. Ausserdem können die Präparationen geringe Mengen an Sikkativen beinhalten. Insbesondere wenn die Azofarbstoffe in flüssiger, wässriger Lösung vorliegen (einschliesslich des Gehalts an bei Druckpasten üblichen Verdickungsmitteln), können weitere Substanzen enthalten sein, die die Haltbarkeit dieser Präparationen gewährleisten, wie beispielsweise schimmelverhütende und oder gefrierpunktsenkende Mittel.

Bevorzugt liegen die erfindungsgemässen Azofarbstoffe der allgemeinen Formel (1) als elektrolytsalzhaltige Farbstoffpulver mit einem Gehalt von 20 bis 95 Gew.-%, bezogen auf das Gesamtgewicht des Farbstoffpulvers bzw. der Präparation vor.

Die Farbstoffpulver können zudem die oben erwähnten Puffersubstanzen in einer Gesamtmenge von bis zu 10 Gew.-%, bezogen auf das Farbstoffpulver enthalten.

Die erfindungsgemässen Azofarbstoffe der Formel (1) können auch in wässriger Lösung (Flüssigpräparationen) vorliegen. In diesem Falle beträgt der Gesamtfarbstoffgehalt solchen wässrigen Lösungen bis zu etwa 40 Gew.-%, wie beispielsweise zwischen 5 und 40 Gew.-%, wobei der Elektrolytsalzgehalt in diesen wässrigen Lösungen bevorzugt unterhalb 10 Gew.-% liegt (bezogen auf die jeweilige wässrige Lösung). Weiter können die wässrigen Lösungen die oben erwähnten Puffersubstanzen in einer Menge von bis zu 10 Gew.-%, bevorzugt bis zu 2 Gew.-%, enthalten.

Die Herstellung der erfindungsgemässen Azofarbstoffe kann entsprechend bekannter Syntheseverfahren für Azofarbstoffe erfolgen und umfasst somit in der Regel eine Azokupplungsreaktion nach einer vorheriger Diazotierungreaktion. Während der Azokupplungsreaktion wird das aus dem Diazotierungsschritt erhaltene Diazoniumsalz mit einer Kupplungskomponente umgesetzt. Kupplungskomponenten können heterocyclische Verbindungen wie substituierte Pyridone sein. Die in der Synthese verwendeten Komponenten können entsprechend den bekannten Herstellungsverfahren von Azofarbstoffen in einer dem Fachmann geläufigen Weise und mit den hierzu erforderlichen Mengenanteilen hergestellt werden.

Die Herstellung der erfindungsgemässen Farbstoffe der allgemeinen Formel (1) kann durch Umsetzung einer Verbindung der allgemeinen Formel (4) mit einer Verbindung der allgemeinen Formel (5), oder Umsetzung einer Verbindung der allgemeinen Formel (6) mit einer Verbindung der allgemeinen Formel (7), erfolgen. Die allgemeinen Formeln (4) bis (7) sind dabei wie folgt definiert: 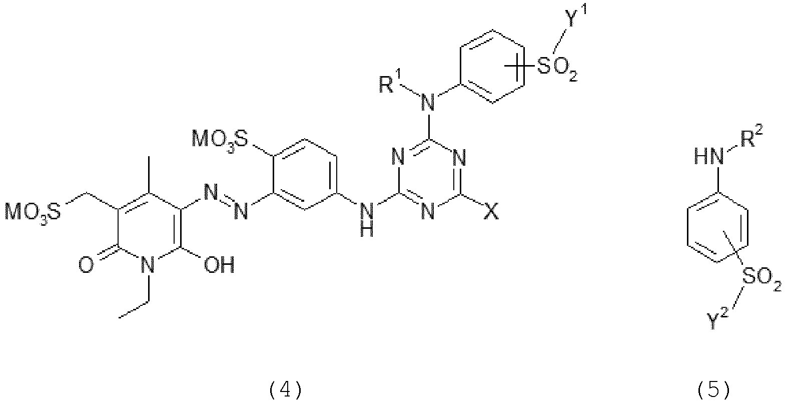 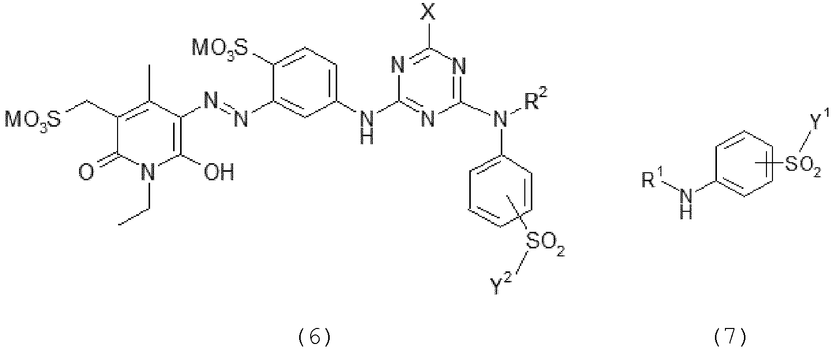 wobei X für Chlor oder Fluor steht und M, R¹, R², Y¹ und Y² die oben, bzw. im Anspruch 1, angegebene Bedeutung haben. Besonders bevorzugt erfolgt die Herstellung der erfindungsgemässen Farbstoffe der allgemeinen Formel (1) durch Umsetzen von Verbindungen der allgemeinen Formeln (4) und (6), wobei X für Chlor steht.

Die Herstellung der Verbindungen der allgemeinen Formeln (4) und (6) ist dem Fachmann bekannt, etwa aus der DE 19922825 A1 oder der JP 5692961.

Die erfindungsgemässen Farbstoffmischungen können durch mechanisches Mischen der Einzelfarbstoffe im gewünschten Gewichtsverhältnis erhalten werden. Dabei können die Einzelfarbstoffe in Form von Farbstoffpulvern oder Farbstofflösungen oder auch in Form von formulierten Handelsformen, also etwa als Pulver, Granulat oder Flüssigeinstellung, die übliche Hilfsmittel enthalten, eingesetzt werden.

Die erfindungsgemässen Azofarbstoffe der allgemeinen Formel (1) besitzen wertvolle anwendungstechnische Eigenschaften und eignen sich besonders gut zum Färben und Bedrucken von Carbonamid- und/oder Hydroxygruppen-haltigen Materialien. Carbonamidgruppen-haltige Materialien sind beispielsweise synthetische oder natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Hydroxygruppen-haltige Materialien können sowohl natürlichen als auch synthetischen Ursprungs sein, wie beispielsweise Cellulosefasermaterialien oder deren Regeneratprodukte und Polyvinylalkohole. Cellulosefasermaterialien sind beispielsweise Baumwolle, aber auch andere Pflanzenfasern, wie Leinen, Hanf, Jute und Ramiefaser. Regenerierte Cellulosefasern sind beispielsweise Zellwolle, Modal und Viskosekunstseide.

Die zu bedruckenden oder zu färbenden Materialien können beispielsweise in Form von Flächengebilden wie Papier und Leder, in Form von Folie, wie beispielsweise Polyamidfolien oder in Form einer Masse, beispielsweise aus Polyamid oder Polyurethan vorliegen. Insbesondere liegen Sie aber bevorzugt in Form von Fasern der genannten Materialien vor.

Die erfindungsgemässen Azofarbstoffe der allgemeinen Formel (1) können insofern insbesondere zum Färben und Bedrucken cellulosehaltiger Fasermaterialien aller Art verwendet werden. Dabei eignen sie sich auch besonders zum Färben oder Bedrucken von Polyamidfasern oder von Mischgewebe aus Polyamid mit Baumwolle oder mit Polyesterfasern.

Die vorliegende Erfindung betrifft daher auch die Verwendung der erfindungsgemässen Azofarbstoffe der allgemeinen Formel (1) zum Färben und Bedrucken von Carbonamid- und/oder Hydroxy-gruppenhaltigen Materialien. Die erfindungsgemässen Azofarbstoffe liefern auf diesen Materialien, bevorzugt Fasermaterialien, orangefarbene bis rote Färbungen mit sehr guten Echtheitseigenschaften und einem guten Aufbau. Folglich sind neben Färbemittel, insbesondere Drucktinte, die einen oder mehrere erfindungsgemässe Azofarbstoffe bzw. eine erfindungsgemässe Farbmischung enthalten, auch jegliche Verfahren, bei welchen ein solches Färbemittel zum Färben oder Bedrucken der oben genannten Materialien einsetzt werden, Gegenstand der vorliegenden Erfindung.

Vorteilhafterweise können die bei der Herstellung anfallenden Lösungen der erfindungsgemässen Azofarbstoffe der allgemeinen Formel (1) - gegebenenfalls nach Zusatz einer Puffersubstanz und/oder nach Konzentrieren oder Verdünnen - direkt als Flüssigpräparation als Färbemittel eingesetzt werden.

Die erfindungsgemässen Azofarbstoffe der allgemeinen Formel (1) lassen sich auf den genannten Materialien, bevorzugt auf den oben genannten Fasermaterialien, entsprechend der für wasserlösliche und bevorzugt faserreaktive Azofarbstoffe bekannten Anwendungstechniken applizieren und fixieren.

Auf Cellulosefasern erhält man nach den Ausziehverfahren sowohl aus kurzer, als auch aus langer Flotte unter Verwendung von verschiedensten säurebindenden Mitteln und gegebenenfalls neutralen Salzen, wie Natriumchlorid oder Natriumsulfat, Färbungen mit sehr guten Farbausbeuten. Das Flottenverhältnis kann innerhalb eines weiten Bereichs gewählt werden und liegt beispielsweise zwischen 1:3 und 1:100, vorzugsweise zwischen 1:5 und 1:30.

Man färbt bevorzugt in wässrigem Bad bei Temperaturen zwischen 40°C und 105°C, gegebenenfalls bei einer Temperatur bis zu 130°C unter Druck, und gegebenenfalls in Gegenwart von üblichen Färbereihilfsmitteln. Zur Erhöhung der Nassechtheiten des gefärbten Materials kann nicht-fixierter Farbstoff in einer Nachbehandlung entfernt werden. Diese Nachbehandlung erfolgt bevorzugt bei einem pH-Wert von 8 bis 9 und Temperaturen von 75°C bis 100°C.

Beim Färbeprozess kann das Material in das warme Bad einbracht und dieses allmählich auf die gewünschte Temperatur erwärmt werden, um dann den Färbeprozess zu Ende zu führen. Die oben erwähnten neutralen Salze, z.B. Natriumchlorid oder Natriumsulfat, beschleunigen das Ausziehen der Azofarbstoffe und können dem Bade gegebenenfalls auch erst nach Erreichen der eigentlichen Färbetemperatur zugesetzt werden.

Nach dem Klotzverfahren werden auf Cellulosefasern ebenfalls ausgezeichnete Farbausbeuten und ein sehr guter Farbaufbau erhalten, wobei durch Verweilen bei Raumtemperatur oder erhöhter Temperatur, beispielsweise bis zu 60°C, durch Dämpfen oder mit Trockenhitze in üblicher Weise fixiert werden kann.

Ebenfalls nach den üblichen Druckverfahren für Cellulosefasern, die einphasig oder zweiphasig durchgeführt werden können, erhält man farbstarke Drucke mit gutem Stand der Konturen und einem klaren Weissfond. Der Ausfall der Drucke ist von schwankenden Fixierbedingungen nur wenig abhängig.

Bei einphasigen Druckverfahren für Cellulosefasern erfolgt das Bedrucken beispielsweise mit einer Natriumbikarbonat oder ein anderes säurebindendes Mittel enthaltenden Druckpaste und anschliessendem Dämpfen bei 100°C bis 130°C. Zweiphasiges Bedrucken erfolgt beispielsweise durch Bedrucken mit neutraler oder schwach saurer Druckfarbe und anschliessendem Fixieren, entweder durch Hindurchführen durch ein heisses, elektrolythaltiges, alkalisches Bad oder durch Überklotzen mit einer alkalischen, elektrolythaltigen Klotzflotte und anschliessendem Verweilen oder Dämpfen oder anschliessender Behandlung mit Trockenhitze des alkalisch überklotzten Materials. Bei der Fixierung mittels Trockenhitze verwendet man nach den üblichen Thermofixierverfahren Heissluft von 120°C bis 200°C. Neben dem üblichen Wasserdampf von 101°C bis 103°C kann auch überhitzter Dampf und Druckdampf bei einer Temperatur von bis zu 160°C eingesetzt werden.

Als säurebindende und die Fixierung der Azofarbstoffe auf den Cellulosefasern bewirkende Mittel können beispielsweise wasserlösliche, basische Salze der Alkalimetalle und/oder Erdalkalimetalle von anorganischen oder organischen Säuren oder Verbindungen, die in der Hitze Alkali freisetzen, eingesetzt werden. Bevorzugt werden Alkalimetallhydroxide und/oder Alkalimetallsalze von schwachen bis mittelstarken anorganischen oder organischen Säuren verwendet, wobei von den Alkalimetallverbindungen Natrium- und Kaliumverbindungen bevorzugt sind. Bevorzugte säurebindende Mittel sind etwa Natriumhydroxid, Kaliumhydroxid, Natriumcarbonat, Natriumbicarbonat, Kaliumcarbonat, Natriumformiat, Dinatriumhydrogenphosphat, Trinatrium-phosphat oder Wasserglas.

Die erfindungsgemässen Azofarbstoffe der allgemeinen Formel (1) zeichnen sich auf Cellulosefaser-Materialien bei Anwendung in den bekannten Färbe- und Druckverfahren durch eine hohe Brillanz und einen steilen Verlauf der Aufbaukurve aus.

Ausserdem weisen die mit den erfindungsgemässen Azofarbstoffen der allgemeinen Formel (1) erhältlichen Färbungen und Drucke auf Cellulosefaser-Materialien eine gute Lichtechtheit und gute Schweisslichtechtheiten auf.

Weiterhin zeigen die Färbungen und Drucke nach der üblichen Nachbehandlung durch Spülen zur Entfernung von nicht fixierten Farbstoffanteilen ausgezeichnete Nassechtheiten, zumal sich nicht fixierte Farbstoffanteile leicht auswaschen lassen.

Die erfindungsgemässen Azofarbstoffe der allgemeinen Formel (1) können auch für das faserreaktive Färben von Wolle Verwendung finden. Besonders filzfrei oder filzarm ausgerüstete Wolle (vgl. beispielsweise H. Rath, Lehrbuch der Textilchemie, Springer-Verlag, 3. Auflage (1972), S. 295-299, insbesondere die Ausrüstung nach dem sogenannten Hercosett-Verfahren (S. 298); J. Soc. Dyers and Colorists 1972, 93-99, und 1975, 33-44) lässt sich mit sehr guten Echtheitseigenschaften färben. Das Verfahren des Färbens auf Wolle erfolgt hierbei in üblicher und bekannter Färbeweise aus saurem Milieu. So kann beispielsweise dem Färbebad Essigsäure und/oder Ammoniumsulfat oder Essigsäure und Ammoniumacetat oder Natriumacetat zugefügt werden, um den gewünschten pH-Wert zu erhalten. Um eine brauchbare Egalität der Färbung zu erreichen, empfiehlt sich ein Zusatz an üblichen Egalisierhilfsmitteln, wie beispielsweise auf Basis eines Umsetzungsprodukts von Cyanurchlorid mit der dreifachen molaren Menge einer Aminosulfonsäure und/oder einer Aminonaphthalinsulfonsäure oder auf Basis eines Umsetzungsprodukts von Stearylamin mit Ethylenoxid. So wird der erfindungsgemässe Azofarbstoff beispielsweise bevorzugt zunächst aus saurem Färbebad mit einem pH-Wert von etwa 3,5 bis 5,5 unter Kontrolle des pH-Werts dem Ausziehprozess unterworfen und der pH-Wert sodann, gegen Ende der Färbezeit, in den neutralen und gegebenenfalls schwach alkalischen Bereich bis zu einem pH-Wert von 8,5 verschoben, um zur Erzielung von hohen Farbtiefen die volle reaktive Bindung zwischen den erfindungsgemässen Azofarbstoffen und der Faser herbeizuführen. Gleichzeitig wird der nicht reaktiv gebundene Farbstoffanteil abgelöst.

Die hier beschriebene Verfahrensweise gilt auch zur Herstellung von Färbungen auf Fasermaterialien aus anderen natürlichen Polyamiden oder aus synthetischen Polyamiden und Polyurethanen. Zum Färben dieser Materialien können die üblichen, in der Literatur und dem Fachmann bekannten Färbe- und Druckverfahren herangezogen werden (siehe zum Beispiel H.-K. Rouette, Handbuch der Textilveredlung, 2006, Deutscher Fachverlag GmbH, Frankfurt am Main).

In der Regel wird das zu färbende Material bei einer Temperatur von etwa 40°C in das Bad eingebracht, dort einige Zeit darin bewegt, das Färbebad dann auf den gewünschten schwach sauren, vorzugsweise schwach essigsauren, pH-Wert eingestellt und die eigentliche Färbung bei einer Temperatur zwischen 60°C und 98°C durchgeführt. Die Färbungen können aber auch bei Siedetemperatur oder in geschlossenen Färbeapparaturen bei Temperaturen bis zu 106°C ausgeführt werden. Da die Wasserlöslichkeit der erfindungsgemässen Azofarbstoffe sehr gut ist, lassen sie sich auch mit Vorteil bei üblichen kontinuierlichen Färbeverfahren einsetzen.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in den Beispielen formelmässig beschriebenen Verbindungen sind in Form der Natriumsalze geschrieben, da sie im Allgemeinen in Form ihrer Salze, vorzugsweise Natrium- oder Kaliumsalze, hergestellt und isoliert und in Form ihrer Salze zum Färben verwendet werden.

Die in den nachfolgenden Beispielen genannten Ausgangsverbindungen können in Form der freien Säure oder ebenso in Form ihrer Salze, vorzugsweise Alkalimetallsalze, wie Natrium- oder Kaliumsalze, in die Synthese eingesetzt werden.

### Beispiel 1

84 Teile der aus JP 5692961 bekannten Verbindung (in Form der freien Säure) der Formel (10) werden in 700 Teilen Wasser gelöst. Die Lösung wird mit 28.6 Teilen 3-((2-(Sulfoxy)ethyl)sulfonyl)-anilin versetzt. Bei 75 - 80 °C wird der pH mit 15 %-iger Sodalösung bis zum Reaktionsende bei 3,5 gehalten.

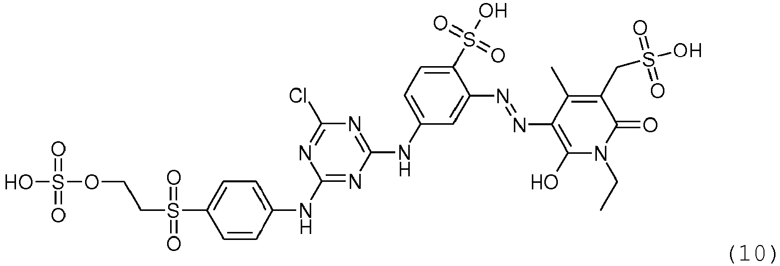

Der erfindungsgemässe Azofarbstoff (Amax = 424.1 nm) der Formel (1a) (in Form der freien Säure) wird erhalten.

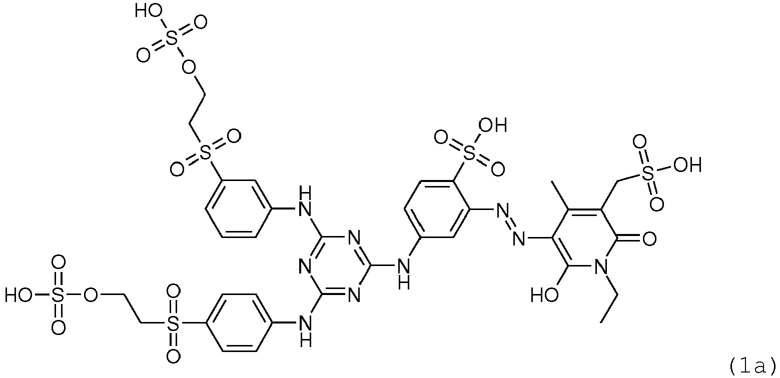

### Beispiel 2

Zu der in Beispiel 1 beschriebenen Lösung der Monochlortriazin-Komponente der Formel (10) werden 28.6 Teile 4-((2-(Sulfoxy)ethyl)sulfonyl)-anilin gegeben. Bei pH 3-4, gehalten durch Zugabe einer 15 %-igen Sodalösung und bei einer Temperatur von 75°C bis 80°C, wird bis zur Vollständigkeit der Reaktion gerührt. Nach Trocknen der Reaktionslösung und Mahlen wird der erfindungsgemässe pulverförmige Reaktivfarbstoff (Amax = 425.1 nm) der Formel (1b) (in Form der freien Säure) erhalten.

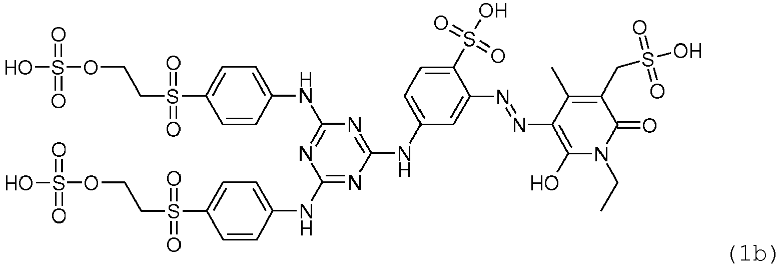

### Beispiel 3

84 Teile der aus JP 5692961 bekannten Verbindung (in Form der freien Säure) der Formel (11) werden in 700 Teilen Wasser gelöst. Die Lösung wird mit 28.6 Teilen 3-((2-(Sulfoxy)ethyl)sulfonyl)-anilin versetzt. Bei 75°C - 80°C wird der pH mit 15 %-iger Sodalösung bis zum Reaktionsende bei 3,5 gehalten.

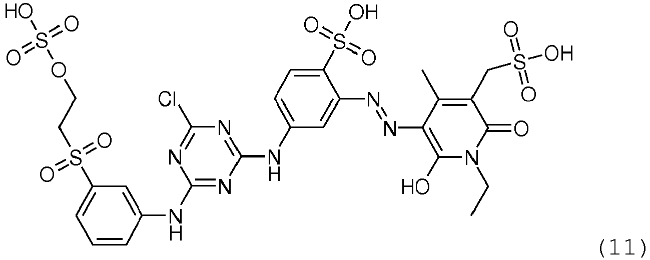

Der erfindungsgemässe Azofarbstoff (Amax = 425.3 nm) der Formel (1c) (in Form der freien Säure) wird erhalten.

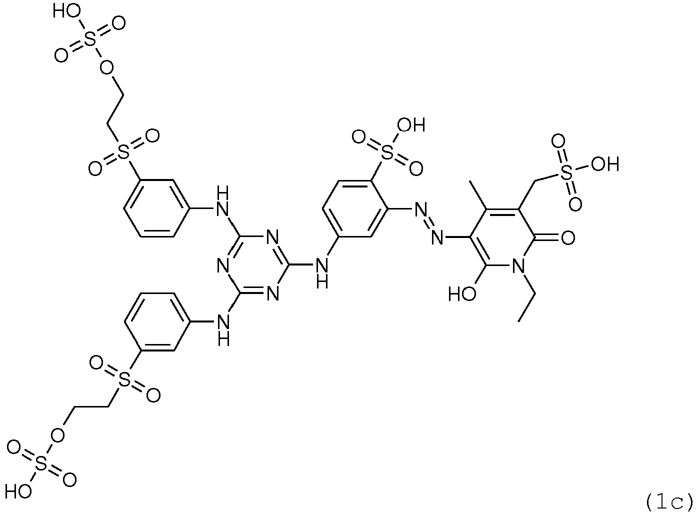

Entsprechend den Angaben der genannten Beispiele können weitere erfindungsgemässe Azofarbstoffe der allgemeinen Formel (1) erhalten werden.

### Beispiel 4

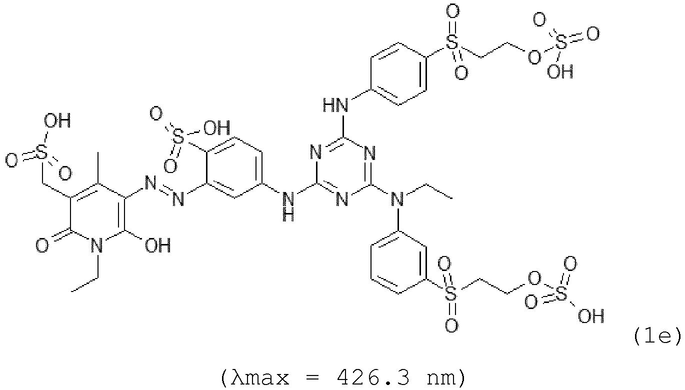

### Beispiel 5

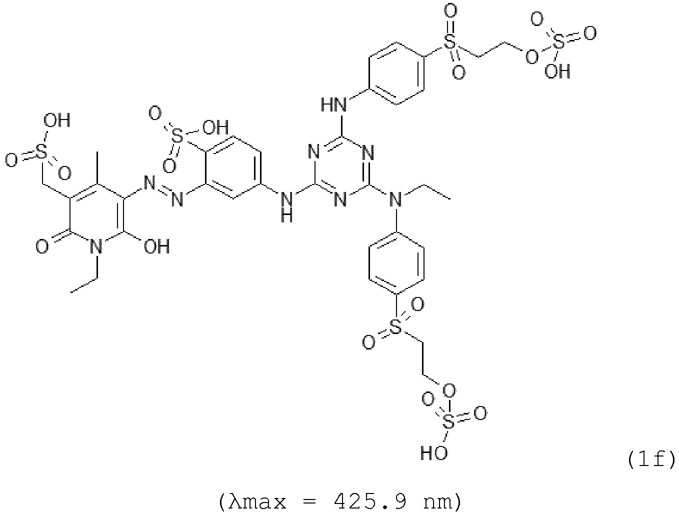

### Beispiel 6

Man vermischt 1000 Teile einer wässrigen Syntheselösung mit 108 Teilen des Farbstoffs der Formel (1a) (in Form der freien Säure) mit 1000 Teilen einer wässrigen Lösung von 79 Teilen des Farbstoffs der Formel (2a) (in Form der freien Säure).

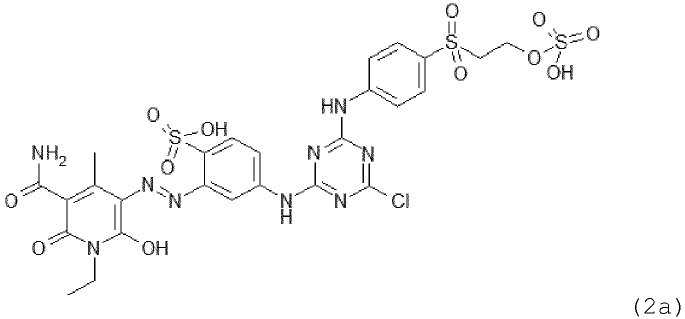

Man isoliert die erfindungsgemässe Farbstoffmischung in einem molaren Verhältnis des Farbstoffs (1a) zu Farbstoff 82a) von 50:50 aus der vereinigten Lösung durch Sprühtrocknung der Farbstofflösung. Die erhaltene Farbstoffmischung zeigt sehr gute färberische Echtheiten und liefert auf cellulosischen Fasermaterialien, wie Baumwolle in einem für faserreaktive Farbstoffe üblichen Auszieh-Färbeverfahren egale gelbe Färbungen, die einen sehr guten Aufbau besitzen.

### Beispiel 7

Das in Beispiel 6 erhaltene Farbstoffpulver wird im Verhältnis von 50:50 mit einem Farbstoffgemisch der allgemeinen Formel (3), z.B. bekannt als Reaktiv Blau 21, vermischt. Die erhaltene Farbstoffmischung zeigt sehr gute färberische Echtheiten und liefert auf cellulosischen Fasermaterialien, wie Baumwolle in einem für faserreaktive Farbstoffe üblichen Auszieh-Färbeverfahren egale brillante grüne Färbungen.

### Färbebeispiel 8

2 Teile des gemäss Beispiel 3 erhaltenen Azofarbstoffs (1c) und 50 Teile Natriumchlorid werden in 1000 Teilen Wasser gelöst und 5 Teile Natriumcarbonat, 0,7 Teile Natriumhydroxid (in Form einer 32,5 %-igen wässrigen Lösung) und gegebenenfalls 1 Teil eines Benetzungsmittels zugesetzt. In dieses Färbebad gibt man 100 g eines Baumwollgewebes. Die Temperatur des Färbebades wird zunächst 10 Minuten bei 25°C gehalten, dann in 30 Minuten auf Endtemperatur (60°C) erhöht und diese Temperatur weitere 60 Minuten gehalten. Danach wird die gefärbte Ware mit Permutit-Wasser gespült. Die gefärbte Ware wird bei 40°C in 1000 Teilen einer wässrigen Lösung, die 1 Teil einer 50 %-igen Essigsäure enthält, während 10 Minuten neutralisiert. Mit Permutit-Wasser wird bei 70°C nachgespült und dann 15 Minuten mit einem Waschmittel kochend geseift, nochmals gespült und getrocknet. Man erhält eine gelbe Färbung mit sehr guten Echtheitseigenschaften.

Vergleichbare Ergebnisse werden erhalten, wenn man das beschriebene Verfahren mit den gemäss Beispielen 1 bis 6 wiederholt.

### Färbebeispiel 9

4 Teile des gemäss Beispiel 1 erhaltenen Farbstoffs (1a) und 50 Teile Natriumchlorid werden in 998 Teilen Wasser gelöst und 5 Teile Natriumcarbonat, 2 Teile Natriumhydroxid (in Form einer 32,5 %-igen wässrigen Lösung) und gegebenenfalls 1 Teil eines Benetzungsmittels zugesetzt. In dieses Färbebad gibt man 100 g eines Baumwollgewebes. Die weitere Bearbeitung erfolgt wie in Beispiel 6 angegeben. Man erhält eine farbstarke gelbe Färbung mit sehr guten Echtheitseigenschaften.

Vergleichbare Ergebnisse werden erhalten, wenn man das beschriebene Verfahren mit den gemäss Beispielen 1 bis 8 erhaltenen Azofarbstoffen wiederholt.

### Vergleichsbeispiel 10

Der im Dokument EP0273343 als Beispiel beschriebene Farbstoff (9) (Amax = 425.3 nm) ist farblich ähnlich und verfügt auch über ein ähnliches Reaktivsystem wie der erfindungsgemässe Farbstoff (1a). Ein Vergleich der relativen Farbstärken bei gleichen Farbstoff-Einsatzmengen zeigt aber, dass der Farbstoff (9) nur für helle Farbtöne eingesetzt werden kann, da diese bei höheren Einsatzmengen keinen Zuwachs an Farbstärke mehr bewirkt.

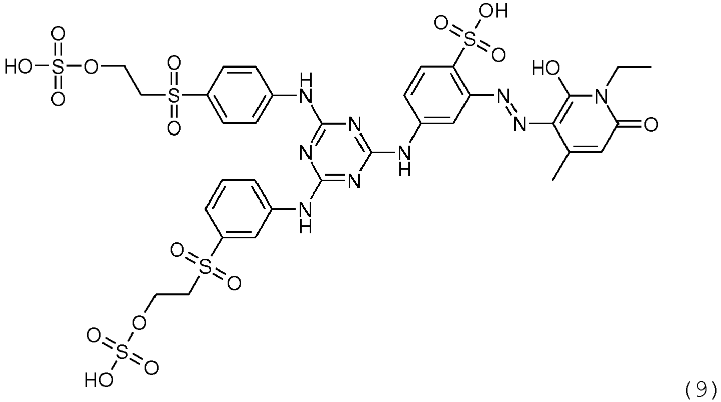

Vergleiche der relativen Farbstärke bei einer typischen Färbung auf Baumwolle gemäss dem Ausziehverfahren bei 60°C:

| Farbstoff-Einsatzmenge | Relative Stärke des Vergleichsfarbstoffs (9) im Vergleich zum erfindungsgemässen Farbstoff (1a) |
|---|---|
| 0.5% | 111% |
| 1% | 82% |
| 2% | 66% |
| 4% | 52% |
| 6% | 40% |

Bei der sehr geringen Einsatzmenge von 0.5% bezogen auf die zu färbende Baumwollmenge zeigt die mit dem Vergleichsfarbstoff (9) erzielte Färbung eine etwas grössere Farbtiefe als die mit dem erfindungsgemässen Farbstoff (1a) erzielte Färbung.

Bei Einsatzmengen oberhalb von 0.5% verlieren die mit dem Vergleichsfarbstoff (9) erzielten Färbungen immer mehr an Farbtiefe verglichen mit den Färbungen, die mit dem erfindungsgemässen Farbstoff (1a) erzielt werden.

## Patentansprüche

1. Faserreaktive Azofarbstoffe der allgemeinen Formel (1) 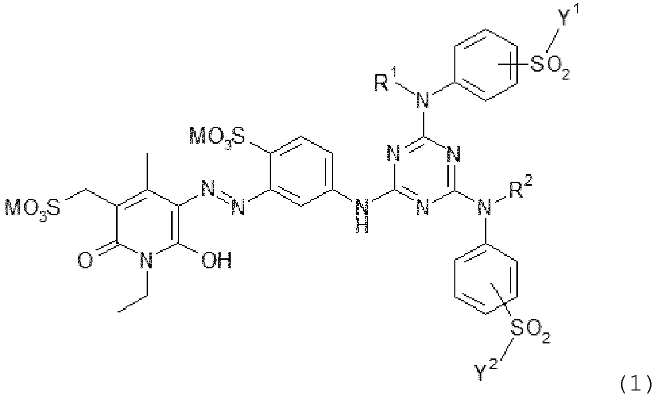 wobei
M für Wasserstoff oder ein Alkalimetall;
R¹ und R² unabhängig voneinander für Wasserstoff (-H), Methyl (-CH₃) oder Ethyl (-CH₂-CH₃) ; und
Y¹ und Y² unabhängig voneinander für -CH=CH₂ oder -CH₂-CH₂-Z, stehen
und Z eine unter alkalischen Bedingungen abspaltbare Gruppe ist.

2. Azofarbstoffe gemäss Anspruch 1, **dadurch gekennzeichnet, dass** R¹ und R² für Wasserstoff (-H) stehen und Z für Sulfat (-SO₄²⁻) steht.

3. Verfahren zur Herstellung eines Azofarbstoffs gemäss Anspruch 1 oder 2, **dadurch gekennzeichnet, dass** eine Monoazoverbindung der allgemeinen Formel (4) 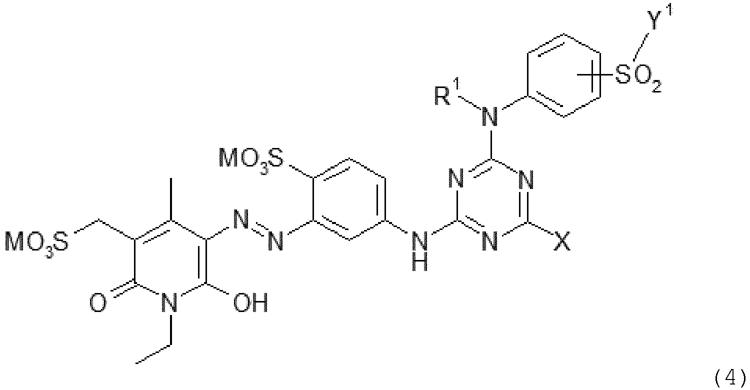 mit einer Verbindung der allgemeinen Formel (5) umgesetzt wird, 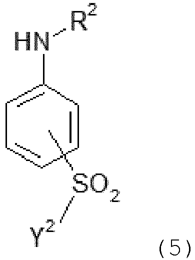 wobei X für Chlor oder Fluor steht und M, R¹, R², Y¹ und Y² die im Anspruch 1 oder 2 angegebene Bedeutung haben.

4. Farbstoffmischung, enthaltend einen oder mehrere Azofarbstoffe der allgemeinen Formel (1) gemäss Anspruch 1 oder 2, sowie mindestens einen weiteren faserreaktiven Farbstoff.

5. Farbstoffmischung gemäss Anspruch 4, enthaltend einen oder mehrere faserreaktive(n) Farbstoff(e) aus der Gruppe bestehend aus Farbstoffen der allgemeinen Formeln (2) und (3), 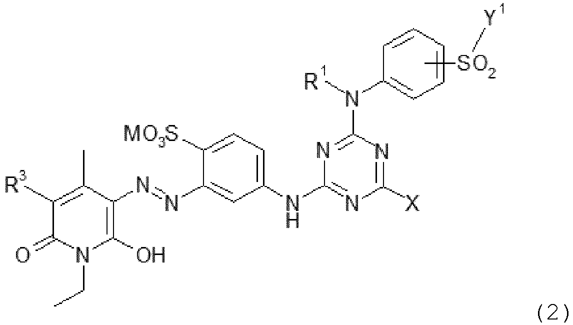 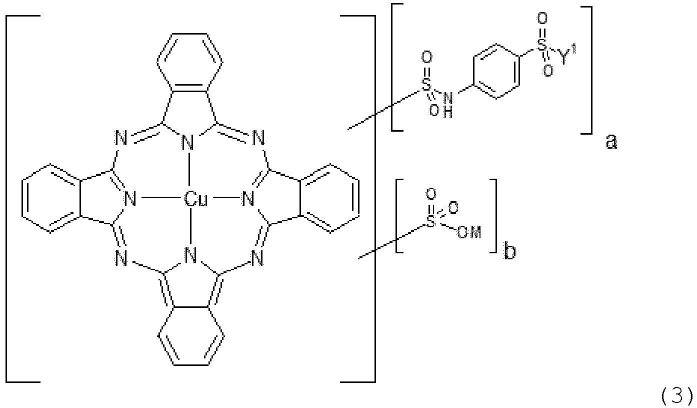 wobei
R³ für Sulfomethyl oder Carbamoyl;
X für Chlor oder Fluor;
a für 1, 2 oder 3; und
b für 4-a steht,
und M, Y¹ und R¹ die in Anspruch 1 angegebene Bedeutung haben.

6. Farbstoffmischung gemäss Anspruch 4 oder 5, **dadurch gekennzeichnet, dass** der Azofarbstoff der allgemeinen Formel (1) in einer Menge von 10 bis 90 Gew.-%, und der mindestens eine weitere faserreaktive Farbstoff in einer Menge von 10 bis 90 Gew.-%, bezogen auf die Gesamtfarbstoffmenge, vorliegt.

7. Farbstoffmischung gemäss Anspruch 6, **dadurch gekennzeichnet, dass** der Azofarbstoff der allgemeinen Formel (1) in einer Menge von 30 bis 70 Gew.-%, bevorzugt 40 bis 60 Gew.-%; und der mindestens eine weitere faserreaktive Farbstoff in einer Menge von 30 bis 70 Gew.-%, bevorzugt 40 bis 60 Gew.-%, bezogen auf die Gesamtfarbstoffmenge, vorliegt.

8. Farbstoffmischung gemäss Anspruch 5, enthaltend 10 bis 80 Gew.-% an Azofarbstoff(en) der allgemeinen Formel (1); 10 bis 70 Gew.-% an Farbstoff(en) der allgemeinen Formel (2) ; und 10 bis 50 Gew.-% an Farbstoff (en) der allgemeinen Formel (3), bezogen auf die Gesamtfarbstoffmenge.

9. Verfahren zur Herstellung einer Farbstoffmischung gemäss einem oder mehreren Ansprüchen 4 bis 8, **dadurch gekennzeichnet, dass** man die Einzelfarbstoffe im gewünschten Gewichtsverhältnis mechanisch mischt.

10. Verwendung eines Azofarbstoffs gemäss Anspruch 1 oder 2, beziehungsweise der Farbstoffmischung gemäss einem oder mehreren der Ansprüche 4 bis 8 zum Färben Hydroxy- und/oder Carbonamidgruppen-haltiger Materialien.

11. Drucktinte enthaltend einen Azofarbstoff gemäss Anspruch 1 oder 2, beziehungsweise eine Farbstoffmischung gemäss einem oder mehreren der Ansprüche 4 bis 8.

## Claims

1. Fibre-reactive azo dyes of general formula (1) 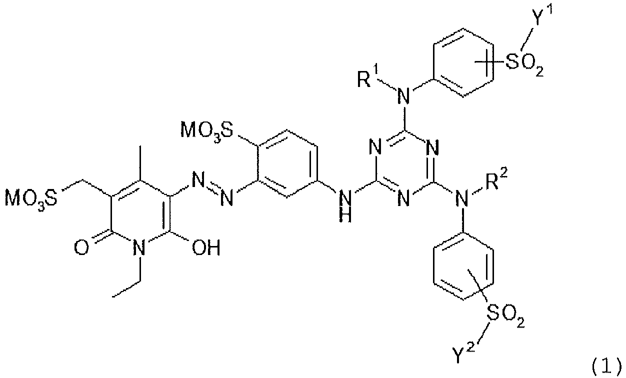 where
M is hydrogen or an alkali metal;
R¹ and R² independently of one another are hydrogen (-H), methyl (-CH₃) or ethyl (-CH₂-CH₃) ; and
Y¹ and Y² independently of one another are -CH₂=CH₂ or -CH₂-CH₂-Z,
and Z is a group which can be eliminated under alkaline conditions.

2. Azo dyes according to Claim 1, **characterized in that** R¹ and R² are hydrogen (-H) and Z is sulfate (-SO₄²⁻).

3. Process for preparing an azo dye according to Claim 1 or 2, **characterized in that** a monoazo compound of general formula (4) 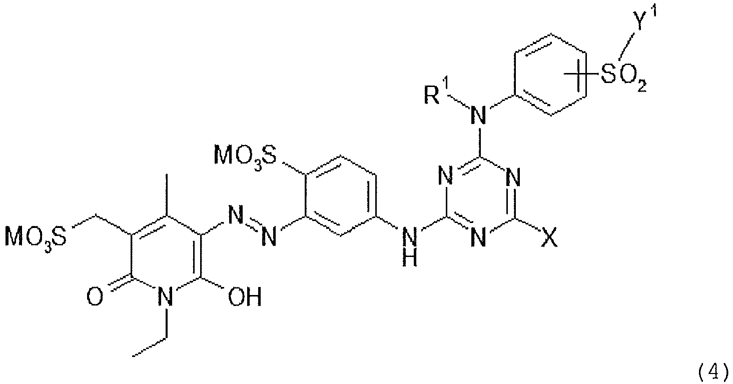 is reacted with a compound of general formula (5) 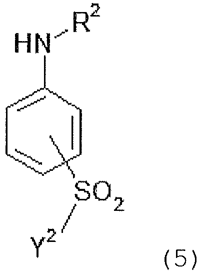 where X is chlorine or fluorine and M, R¹, R², Y¹ and Y² have the definition given in Claim 1 or 2.

4. Dye mixture containing one or more azo dyes of general formula (1) according to Claim 1 or 2 and at least one further fibre-reactive dye.

5. Dye mixture according to Claim 4 containing one or more fibre-reactive dyes from the group consisting of dyes of general formulae (2) and (3), 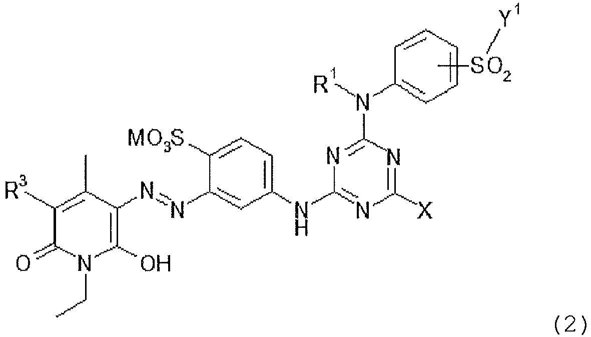 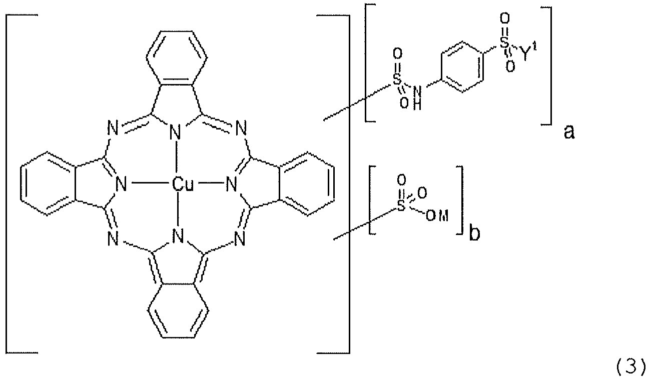 where
R³ is sulfomethyl or carbamoyl;
X is chlorine or fluorine;
a is 1, 2 or 3; and
b is 4-a,
and M, Y¹ and R¹ have the definition given in Claim 1.

6. Dye mixture according to Claim 4 or 5, **characterized in that** the azo dye of general formula (1) is present in an amount of 10% to 90% by weight, and the at least one further fibre-reactive dye is present in an amount of 10% to 90% by weight, based on the total amount of dye.

7. Dye mixture according to Claim 6, **characterized in that** the azo dye of general formula (1) is present in an amount of 30% to 70% by weight, preferably 40% to 60% by weight; and the at least one further fibre-reactive dye is present in an amount of 30% to 70% by weight, preferably 40% to 60% by weight, based on the total amount of dye.

8. Dye mixture according to Claim 5, containing 10% to 80% by weight of azo dye(s) of general formula (1); 10% to 70% by weight of dye(s) of general formula (2); and 10% to 50% by weight of dye(s) of general formula (3), based on the total amount of dye.

9. Process for producing a dye mixture according to one or more of Claims 4 to 8, **characterized in that** the individual dyes are mechanically mixed in the desired weight ratio.

10. Use of an azo dye according to Claim 1 or 2 or of the dye mixture according to one or more of Claims 4 to 8 for dyeing materials containing hydroxyl and/or carbonamide groups.

11. Printing ink containing an azo dye according to Claim 1 or 2 or a dye mixture according to one or more of Claims 4 to 8.

## Revendications

1. Colorants azoïques réactifs avec les fibres de la formule générale (1) 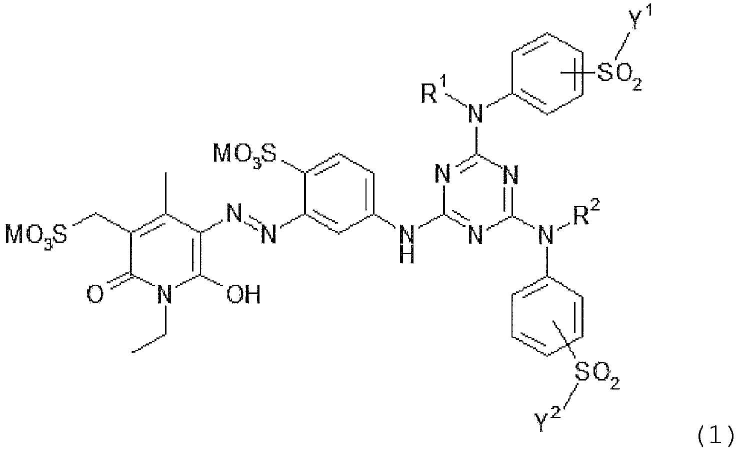 dans laquelle
M représente hydrogène ou un métal alcalin ;
R¹ et R² représentent indépendamment l'un de l'autre hydrogène (-H), méthyle (-CH₃) ou éthyle (-CH₂-CH₃) ; et
Y¹ et Y² représentent indépendamment l'un de l'autre-CH=CH₂ ou -CH₂-CH₂-Z,
et Z est un groupe clivable en conditions alcalines.

2. Colorants azoïques selon la revendication 1, **caractérisés en ce que** R¹ et R² représentent hydrogène (-H) et Z représente sulfate (-SO₄²⁻).

3. Procédé de fabrication d'un colorant azoïque selon la revendication 1 ou 2, **caractérisé en ce qu'**un composé monoazoïque de la formule générale (4) 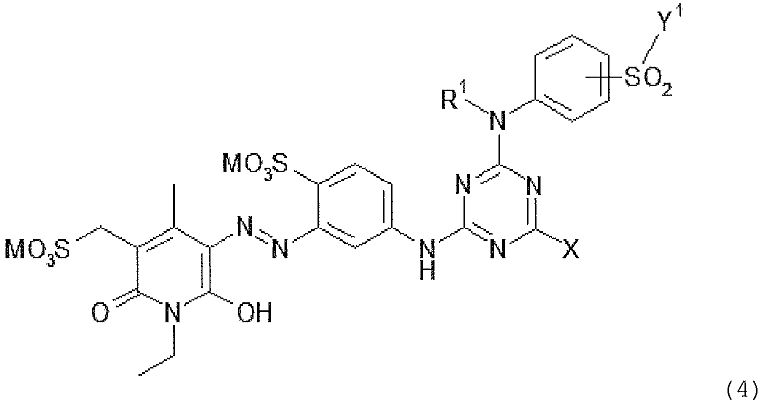 est mis en réaction avec un composé de la formule générale (5) 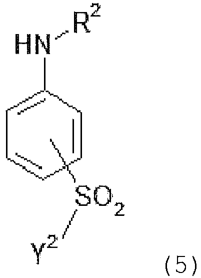 dans laquelle X représente chlore ou fluor et M, R¹, R², Y¹ et Y² ont la signification indiquée dans la revendication 1 ou 2.

4. Mélange de colorants, contenant un ou plusieurs colorants azoïques de la formule générale (1) selon la revendication 1 ou 2, ainsi qu'au moins un colorant réactif avec les fibres supplémentaire.

5. Mélange de colorants selon la revendication 4, contenant un ou plusieurs colorants réactifs avec les fibres du groupe constitué par les colorants des formules générales (2) et (3), 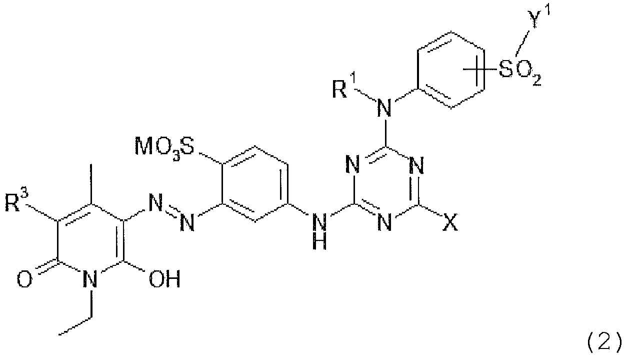 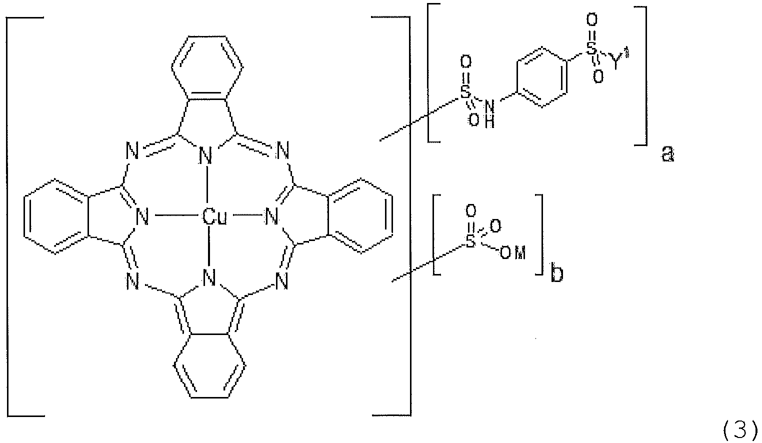 dans lesquelles
R³ représente sulfométhyle ou carbamoyle;
X représente chlore ou fluor ;
a représente 1, 2 ou 3 ; et
b représente 4-a,
et M, Y¹ et R¹ ont la signification indiquée dans la revendication 1.

6. Mélange de colorants selon la revendication 4 ou 5, **caractérisé en ce que** le colorant azoïque de la formule générale (1) est présent en une quantité de 10 à 90 % en poids, et ledit au moins un colorant réactif avec les fibres supplémentaire est présent en une quantité de 10 à 90 % en poids, par rapport à la quantité totale de colorants.

7. Mélange de colorants selon la revendication 6, **caractérisé en ce que** le colorant azoïque de la formule générale (1) est présent en une quantité de 30 à 70 % en poids, de préférence de 40 à 60 % en poids ; et ledit au moins un colorant réactif avec les fibres supplémentaire est présent en une quantité de 30 à 70 % en poids, de préférence de 40 à 60 % en poids, par rapport à la quantité totale de colorants.

8. Mélange de colorants selon la revendication 5, contenant 10 à 80 % en poids d'un ou de plusieurs colorants azoïques de la formule générale (1) ; 10 à 70 % en poids d'un ou de plusieurs colorants de la formule générale (2) ; et 10 à 50 % en poids d'un ou de plusieurs colorants de la formule générale (3), par rapport à la quantité totale de colorants.

9. Procédé de fabrication d'un mélange de colorants selon une ou plusieurs revendications 4 à 8, **caractérisé en ce que** les colorants individuels sont mélangés mécaniquement en le rapport en poids souhaité.

10. Utilisation d'un colorant azoïque selon la revendication 1 ou 2, ou du mélange de colorants selon une ou plusieurs des revendications 4 à 8 pour la coloration de matériaux contenant des groupes hydroxy et/ou carbonamide.

11. Encre d'impression contenant un colorant azoïque selon la revendication 1 ou 2, ou un mélange de colorants selon une ou plusieurs des revendications 4 à 8.
